(19) Europäisches Patentamt
European Patent Office
Office européen des brevets

(11) **EP 4 280 539 B1**

(12) **EUROPEAN PATENT SPECIFICATION**

(45) Date of publication and mention
of the grant of the patent:
**04.12.2024 Bulletin 2024/49**

(21) Application number: **23172822.1**

(22) Date of filing: **11.05.2023**

(51) International Patent Classification (IPC):
**H04L 9/32** (2006.01)

(52) Cooperative Patent Classification (CPC):
**H04L 9/3218; H04L 9/3247**

(54) **CALCULATING METHOD USING ZERO-KNOWLEDGE PROOF-FRIENDLY ONE-WAY FUNCTION, AND APPARATUS FOR IMPLEMENTING THE SAME**

BERECHNUNGSVERFAHREN MIT ZERO-KNOWLEDGE-PROOF-FREUNDLICHER EINWEGFUNKTION UND VORRICHTUNG ZUR IMPLEMENTIERUNG DAVON

PROCÉDÉ DE CALCUL UTILISANT UNE FONCTION UNIDIRECTIONNELLE ÉCOLOGIQUE À CONNAISSANCE NULLE, ET APPAREIL POUR METTRE EN OEUVRE CELUI-CI

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **18.05.2022 KR 20220060914**

(43) Date of publication of application:
**22.11.2023 Bulletin 2023/47**

(73) Proprietors:
• **Samsung SDS Co., Ltd.**
**Seoul (KR)**
• **Korea Advanced Institute of Science and Technology**
**Daejeon (KR)**

(72) Inventors:
• **Moon, Duk Jae**
**SEOUL 05510 (KR)**
• **Lee, Joo Hee**
**SEOUL 05510 (KR)**
• **Lee, Joo Young**
**DAEJEON 34141 (KR)**
• **Son, Yong Ha**
**SEOUL 05510 (KR)**
• **Kim, Seong Kwang**
**DAEJEON 34141 (KR)**
• **Ha, Jin Cheol**
**DAEJEON 34141 (KR)**
• **Son, Min Cheol**
**DAEJEON 34141 (KR)**
• **Lee, Byeong Hak**
**DAEJEON 34141 (KR)**

(74) Representative: **Glawe, Delfs, Moll Partnerschaft mbB von Patent- und Rechtsanwälten Postfach 13 03 91 20103 Hamburg (DE)**

(56) References cited:
• **MELISSA CHASE ET AL: "Post-Quantum Zero-Knowledge and Signatures from Symmetric-Key Primitives", IACR, INTERNATIONAL ASSOCIATION FOR CRYPTOLOGIC RESEARCH, vol. 20170330:123540, 27 March 2017 (2017-03-27), pages 1 - 25, XP061023014, DOI: 10.1145/3133956.3133997**
• **ALBRECHT MARTIN R ET AL: "Ciphers for MPC and FHE", 14 April 2015, ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 430 - 454, ISBN: 978-3-319-10403-4, XP047504688**
• **DAVID DERLER ET AL: "Digital Signatures from Symmetric-Key Primitives", IACR, INTERNATIONAL ASSOCIATION FOR CRYPTOLOGIC RESEARCH, vol. 20170330:124800, 30 March 2017 (2017-03-30), pages 1 - 41, XP061022728**

## Description

BACKGROUND

### 1. FIELD

The present disclosure relates to a calculating method using a zero-knowledge proof-friendly one-way function, and an apparatus for implementing the same, and more particularly, to a calculating method using a zero-knowledge proof-friendly one-way function to perform operation by using the zero-knowledge proof-friendly one-way function when a digital signature is performed, and an apparatus for implementing the same.

### 2. DESCRIPTION OF THE RELATED ART

Recently, as the development of a quantum computer capable of hacking a standard public key password such as RSA, elliptic curve cryptography, and the like is advanced, standardization and research of post-quantum cryptography (PQC) which is a safe password is actively ongoing internationally even after the invention of the quantum computer.

The zero-knowledge proof (ZKP)-based digital signature is a kind of a digital signature using post-quantum cryptography (PQC), and is based on an MPC-in-the-head paradigm suggested by Ishai, et al. in STOC of 2007.

As a main example of the zero-knowledge proof (ZKP)-based digital signature, Picnic, which is a digital signature in which zero-knowledge proof of an MPC-in-the-head method and a dedicated block cipher are combined, is used.

The zero-knowledge proof (ZKP)-based digital signature using a block cipher, such as Picnic, is based on that an input/output pair of the block cipher is one-way function value for a block cipher secret key, and follows a method in which a signature size is proportional to the number of nonlinear operations such as a bitwise AND operation or S-box operation of a block cipher. From "Melissa Chase et al.: "Post-Quantum Zero-Knowledge and Signatures from Symmetric-Key Primitives", IACR, International Association for Cryptologic Research, vol. 20170330:123540, 27 March 2017 (2017-03-27), pages 1-25" a zero-knowledge signature which uses a LowMC block cipher is known.

The zero-knowledge proof-based digital signature using a block cipher performs multi-party computation (MPC) of several times in parallel to make sure of safety against an algebraic attack. For this reason, a problem occurs in that the number of nonlinear operations of the block cipher is increased so that the signature size becomes very large. In addition, as the signature size is increased, a problem occurs in that network transmission costs are large.

Therefore, in designing the zero-knowledge proof-based digital signature, a technology capable of significantly reducing a signature size while making sure of safety against an algebraic attack is required.

### SUMMARY

An object of an example embodiment of the present disclosure is to provide a calculating method using a zero-knowledge proof-friendly one-way function capable of reducing a signature size while being safe against an algebraic attack in designing a zero-knowledge proof-based digital signature, and an apparatus for implementing the same.

Another object of an example embodiment of the present disclosure is to provide a calculating method using a zero-knowledge proof-friendly one-way function capable of providing one-way function having a small number of nonlinear operations in designing a zero-knowledge proof-based digital signature, and an apparatus for implementing the same.

Still another object of an example embodiment of the present disclosure is to provide a calculating method using a zero-knowledge proof-friendly one-way function capable of performing a zero-knowledge proof by using one-way function of a general form rather than a block cipher in designing a zero-knowledge proof-based digital signature, and an apparatus for implementing the same.

The objects of the present disclosure are not limited to those mentioned above and additional objects of the present disclosure, which are not mentioned herein, will be clearly understood by those skilled in the art from the following description of the present disclosure.

At least one of the above-noted objects is solved by the subject matter of the independent claims. Preferable embodiments are described in the dependent claims. According to an aspect of an example embodiment of the present disclosure, there is provided a calculating method using a zero-knowledge proof-friendly one-way function, performed by a computing device, the calculating method including: calculating a first intermediate bit stream by inputting an input bit stream of a one-way function to an augmented matrix, calculating a second intermediate bit stream by dividing the first intermediate bit stream into a predetermined number of bit streams and inputting each of the predetermined number of divided bit streams to a substitution-box (S-box), and outputting an output bit stream of the one-way function by inputting the second intermediate bit stream to a reduced matrix.

Each of a length of the input bit stream and a length of the output bit stream of the one-way function may be N (N being a natural number), each of a length of the first intermediate bit stream and a length of the second intermediate bit stream may be M (M being a natural number), where M is a multiple of N, and a length of a divided bit stream input to the S-box may be L (L being a natural number), where L is a factor of M.

The S-box may include K number of sub S-boxes (K being a natural number greater than or equal to 1), and the calculating the second intermediate bit stream may include: dividing the first intermediate bit stream into K number of bit streams; and inputting each of the K number of divided bit streams to each of the K number of sub S-boxes.

Each of the K number of sub S-boxes may have a nonlinear function for performing a polynomial operation on a finite field.

The augmented matrix may include a binary matrix having a size of M×N, and the reduced matrix may include a binary matrix having a size of N×M.

The calculating method may further include generating the augmented matrix, wherein the generating the augmented matrix may include: configuring a first row and/or a first column of the augmented matrix based on a random value; and configuring remaining rows or remaining columns of the augmented matrix through a circular shift for the first row and/or the first column.

The calculating method may further include generating the reduced matrix, wherein the generating the reduced matrix may include: configuring a first row and/or a first column of the reduced matrix based on a random value; and forming remaining rows or remaining columns of the reduced matrix through a circular shift for the first row and/or the first column.

The calculating method may further include configuring entire rows and/or entire columns of the augmented matrix and entire rows and/or entire columns of the reduced matrix based on random values.

The one-way function may be configured as a single round.

According to the invention, the calculating method includes performing a zero-knowledge proof-based digital signature by using the input bit stream and the output bit stream of the one-way function.

The performing the zero-knowledge proof-based digital signature may include: setting the input bit stream and the output bit stream as a secret key and a public key of a digital signature, respectively; and generating signature data for the digital signature by inputting the secret key and the public key to a proof function for a zero-knowledge proof.

According to an aspect of an example embodiment of the present disclosure, there is provided a computing device including: one or more processors; and a storage configured to store a computer program executable by the one or more processors, wherein the computer program may include: first calculation code configured to cause the one or more processors to calculate a first intermediate bit stream by inputting an input bit stream of a one-way function to an augmented matrix; second calculation code configured to cause the one or more processors to calculate a second intermediate bit stream by dividing the first intermediate bit stream into a predetermined number of bit streams and inputting each of the predetermined number of divided bit streams to S-box; and output code configured to cause the one or more processors to output an output bit stream of the one-way function by inputting the second intermediate bit stream to a reduced matrix.

Each of a length of the input bit stream and a length of the output bit stream of the one-way function may be N (N being a natural number), each of a length of the first intermediate bit stream and a length of the second intermediate bit stream may be M (M being a natural number), where M is a multiple of N, and a length of a divided bit stream input to the S-box may be L (L being a natural number), where L is a factor of M.

The S-box may include K number of sub S-boxes (K being a natural number greater than or equal to 1), and the second calculation code may cause the one or more processors to calculate the second intermediate bit stream by: dividing the first intermediate bit stream into K number of bit streams; and inputting each of the K number of divided bit streams to each of the K number of sub S-boxes.

Each of the K number of sub S-boxes may have a nonlinear function for performing a polynomial operation on a finite field.

The augmented matrix may include a binary matrix having a size of M×N, and the reduced matrix may include a binary matrix having a size of N×M.

The computer program may further include code configured to cause the one or more processors to generate the augmented matrix by: configuring a first row and/or a first column of the augmented matrix based on a random value, and configuring remaining rows or remaining columns of the augmented matrix through a circular shift for the first row and/or the first column.

The computer program may further include code configured to cause the one or more processors to generate the reduced matrix by configuring a first row and/or a first column of the reduced matrix based on a random value, and configuring remaining rows or remaining columns of the reduced matrix through a circular shift for the first row and/or the first column.

The computer program may further include code configured to cause the one or more processors to configure entire rows and/or entire columns of the augmented matrix and entire rows and/or entire columns of the reduced matrix based on random values.

The computer program may further include code configured to cause the one or more processors to perform a zero-knowledge proof-based digital signature by using the input bit stream and the output bit stream of the one-way function, by: setting the input bit stream and the output bit stream as a secret key and a public key of a digital signature, respectively; and generating signature data for the digital signature by inputting the secret key and the public key to a proof function for a zero-knowledge proof.

BRIEF DESCRIPTION OF THE DRAWINGS

The above and other aspects and features of the present disclosure will become more apparent by describing in detail exemplary embodiments thereof with reference to the attached drawings, in which:

FIG. 1 is a flow chart illustrating a calculating method using a zero-knowledge proof-friendly one-way function according to one embodiment of the present disclosure;

FIG. 2 is a flow chart illustrating a detailed process of some steps shown in FIG. 1;

FIG. 3 is an example illustrating an entire process constituting a zero-knowledge proof-friendly one-way function according to some embodiments of the present disclosure;

FIG. 4 is an example of a calculation equation for configuring one-way function calculated in each step of the entire process of FIG. 3;

FIG. 5 is a flow chart illustrating a method of generating an augmented matrix according to some embodiments of the present disclosure;

FIG. 6 is a flow chart illustrating a method of generating a reduced matrix according to some embodiments of the present disclosure;

FIG. 7 is a flow chart illustrating a method of performing a digital signature according to some embodiments of the present disclosure;

FIG. 8 is an example illustrating input/output values when three algorithms for digital signature are performed in accordance with some embodiments of the present disclosure; and

FIG. 9 is a hardware schematic view illustrating an exemplary computing device capable of implementing methods according to one embodiment of the present disclosure.

DETAILED DESCRIPTION OF THE DISCLOSURE

Hereinafter, example embodiments of the present disclosure will be described with reference to the attached drawings. The advantages and features of the present disclosure and methods of accomplishing the same may be understood more readily by reference to the following detailed description of example embodiments and the accompanying drawings. The present disclosure may, however, be embodied in many different forms and should not be construed as being limited to the embodiments set forth herein. Rather, these embodiments are provided so that this disclosure will be thorough and complete and will fully convey the concept of the disclosure to those skilled in the art, and the present disclosure will be defined by the appended claims and their equivalents.

In adding reference numerals to the components of each drawing, it should be noted that the same reference numerals are assigned to the same components as much as possible even though they are shown in different drawings. In addition, in describing the present disclosure, when it is determined that the detailed description of the related well-known configuration or function may obscure the gist of the present disclosure, the detailed description thereof will be omitted.

Unless otherwise defined, all terms used in the present specification (including technical and scientific terms) may be used in a sense that may be commonly understood by those skilled in the art. In addition, the terms defined in the commonly used dictionaries are not ideally or excessively interpreted unless they are specifically defined clearly. The terminology used herein is for the purpose of describing particular embodiments only and is not intended to be limiting of the disclosure. In this specification, the singular also includes the plural unless specifically stated otherwise in the phrase.

In addition, in describing the component of this disclosure, terms, such as first, second, A, B, (a), (b), may be used. These terms are only for distinguishing the components from other components, and the nature or order of the components is not limited by the terms. If a component is described as being "connected," "coupled" or "contacted" to another component, that component may be directly connected to or contacted with that other component, but it should be understood that another component also may be "connected," "coupled" or "contacted" between each component.

The terms "comprise", "include", "have", etc. when used in this specification, specify the presence of stated features, integers, steps, operations, elements, components, and/or combinations of them but do not preclude the presence or addition of one or more other features, integers, steps, operations, elements, components, and/or combinations thereof.

Hereinafter, some embodiments of the present disclosure will be described in detail with reference to the accompanying drawings.

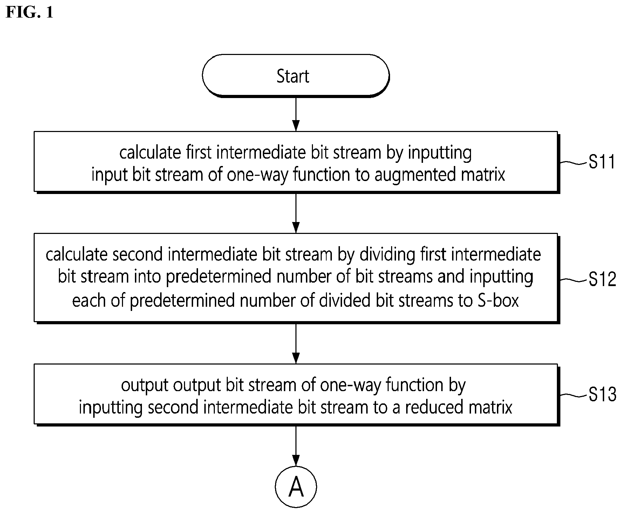

FIG. 1 is a flow chart illustrating a calculating method using a zero-knowledge proof-friendly one-way function according to one embodiment of the present disclosure.

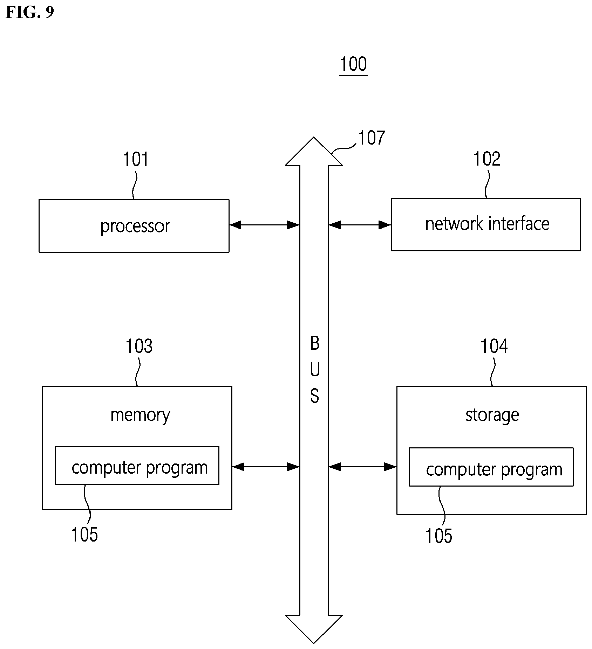

A calculating method using a zero-knowledge proof-friendly one-way function according to one embodiment of the present disclosure may be executed by a computing device 100 shown in FIG. 9. The computing device 100 for executing the method according to the present embodiment may be a computing device having an application program execution environment. The computing device 100 may be, for example, a device capable of performing an operation function, such as a PC, a server, a laptop computer and a smart phone.

A description of a subject performing some steps included in the method according to the embodiment of the present disclosure may be omitted, and in such a case, it is noted that the subject is the computing device 100.

According to the embodiment of the present disclosure described below, a zero-knowledge proof (ZKP) friendly one-way function, which is not the form of a block cipher, may be configured.

First, in step S11, the computing device 100 calculates a first intermediate bit stream by inputting an input bit stream of one-way function to an augmented matrix.

As one embodiment, when a length of the input bit stream is N (N is a natural number), and an augmented matrix is implemented as a binary matrix having a size of MxN (M is a natural number and a multiple of N), the length N of the input bit stream input to the augmented matrix may be extended to calculate the first intermediate bit stream having a length of M.

Next, in step S12, the computing device 100 divides the first intermediate bit stream into a predetermined number of bit streams, and inputs each of the predetermined number of divided bit streams to a substitution box (S-box) to calculate a second intermediate bit stream. In this case, the S-box may be composed of one or more sub S-boxes.

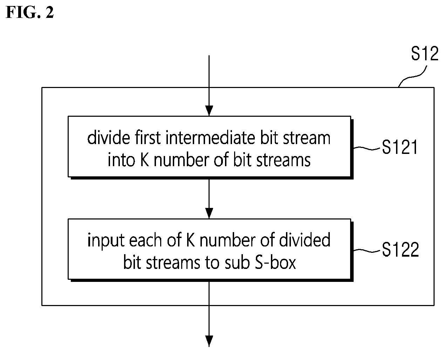

Referring to FIG. 2, the step S12 may include a step S121 of dividing the first intermediate bit stream into K number of bit streams (K is a natural number greater than or equal to 1), and a step S 122 of inputting each of the K number of divided bit streams into K number of sub S-boxes. In this case, in the step S122, the K number of divided bit streams may be respectively input to K number of large sub S-boxes having a high order. For example, each S-box may be set to receive a bit stream having a length of at least 32 or more. The number K of the sub S-boxes used in the present embodiment is equal to or greater than 1, and the maximum limited number of the sub S-boxes may be preset so that a size of a zero-knowledge proof-based digital signature is not greater than a threshold value.

In the zero-knowledge proof using a conventional block cipher, several small S-boxes having a low order are used and an S-box operation is performed in a table reference method. However, when a large S-box with a high order is used as in the present embodiment, the S-box operation may be implemented by a polynomial operation method on a finite field instead of the table reference method.

As one embodiment, the sub S-box used in the step S 122 may be defined as a nonlinear function of performing a polynomial operation on a finite field $F_{2l}$ as expressed in [Equation 1] below. In this case, an inverse operation in which the encryption property is safe may be used when the polynomial operation is performed.

$$[\text{Equation 1}]\ S(x) = x^{-1} \text{ in } F_{2^\ell}$$

As described above, in step S122, when each of the K number of divided bit streams is input to the sub S-box, the second intermediate bit stream having a length M may be output through a polynomial operation by the sub S-box.

Next, in step S13, the computing device 100 inputs the second intermediate bit stream to a reduced matrix and outputs an output bit stream of one-way function.

As one embodiment, when a length of the second intermediate bit stream calculated through S-box operation in step S12 is M (M is a natural number and a multiple of N), and a reduced matrix is implemented as a binary matrix having a size of N×M, the length M of the second intermediate bit stream input to the reduced matrix may be reduced so that an output bit stream having a length of N may be output.

At this time, the length of the output bit stream of one-way function may be set to have the same length N as the input bit stream of the one-way function input in step S11. The length of the output bit stream of the one-way function may be set to be greater than the length of the input bit stream. However, in this case, safety against the algebraic attack is increased, but the number of S-box operations is increased, whereby the size of the signature is not significantly reduced. Therefore, the input bit stream and the output bit stream of the one-way function are set to have the same length in order to make sure of safety against the algebraic attack and reduce the size of the signature.

As described above, by performing the steps S11 to S13, a zero-knowledge proof-friendly one-way function, which is not the form of a block cipher, may be configured as a single round.

In the method according to the embodiment of the present disclosure as described above, it is possible to minimize the number of S-boxes for performing a nonlinear operation while making sure of safety against the algebraic attack, thereby remarkably reducing the size of the digital signature. As a result, it is possible to reduce network transmission costs generated when the zero-knowledge proof-based digital signature is performed.

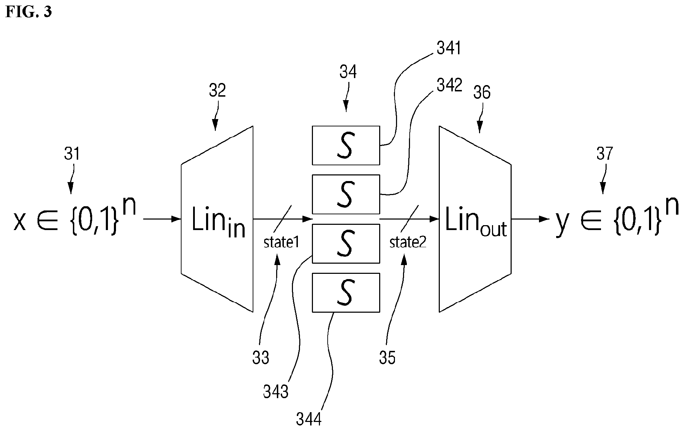

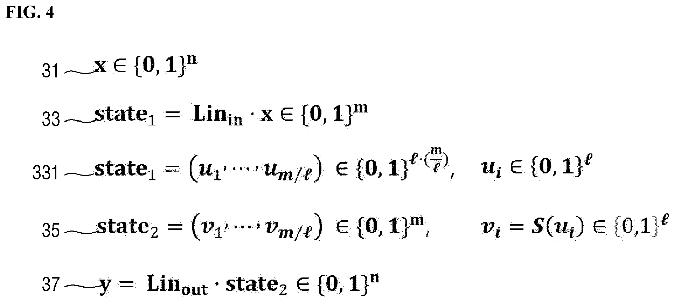

FIG. 3 is an example illustrating an entire process constituting a zero-knowledge proof-friendly one-way function according to some embodiments of the present disclosure. Each step of the entire process shown in FIG. 3 corresponds to the steps S11 to S 13 described in FIG. 1, and will be described through a detailed embodiment. The calculation equation used for calculation in each step of the entire process of FIG. 3 may be obtained with reference to FIG. 4.

First, the computing device 100 may previously set several parameters and matrixes as follows in order to configure a zero-knowledge proof-friendly one-way function.

    it: length of input/output bit stream of one-way function

    $m$: length of the extended first intermediate bit stream, and a multiple of $n$

    $\ell$: length of input/output bit stream of S-box, and a factor of $m$

    Lin$_{in}$: binary matrix of $m \times n$

$Lin_{out}$: binary matrix of $n \times m$

In this case, the parameters $n$, $m$, and $\ell$ may be set to an optimal value to make sure of safety against the algebraic attack while minimizing the size of the digital signature. As an example, $m$ may be set to a twice multiple of $n$, and $l$ may be set to 16 or less.

The computing device 100 may calculate a first intermediate bit stream state1 33 having a length of $m$ by inputting an input bit stream 31 of one-way function having a length of $n$ to an augmented matrix $Lin_{in}$ 32.

Next, the computing device 100 may divide the first intermediate bit stream state1 33 into $\frac{m}{\ell}$ bit streams having a length of $\ell$ (331), and may input each of the divided bit streams $u_i \in \{0,1\}^\ell$ to $\frac{m}{\ell}$ sub S-boxes 341, 342, 343 and 344 to calculate a second intermediate bit stream state2 35 having a length of $m$. In this case, each of the S-boxes 341, 342, 343 and 344 may be a nonlinear function for performing a polynomial operation on a finite field.

Finally, the computing device 100 may calculate an output bit stream 37 of one-way function having a length of $n$ by inputting the second intermediate bit stream state2 35 having a length of $m$ to a reduced matrix $Lin_{out}$ 36.

For example, the computing device 100 may set a value of a parameter as n = 128, m = 2n = 256, $\ell = \frac{m}{4} = 64$ to make sure of safety against an attack using a quantum computer. In this case, the computing device 100 may configure one-way function that inputs an input bit stream having a length of 128 to output an output bit stream having a length of 128. In this case, in order to configure one-way function, the computing device 100 may use four $\left(\frac{m}{\ell}\right)$ sub S-boxes 341, 342, 343 and 344 of which input/output bit streams have a length of 64 ($\ell$).

According to the embodiment, it is possible to reduce the size of the digital signature by reducing the number of nonlinear operations by using the minimum number of large S-boxes having a high order.

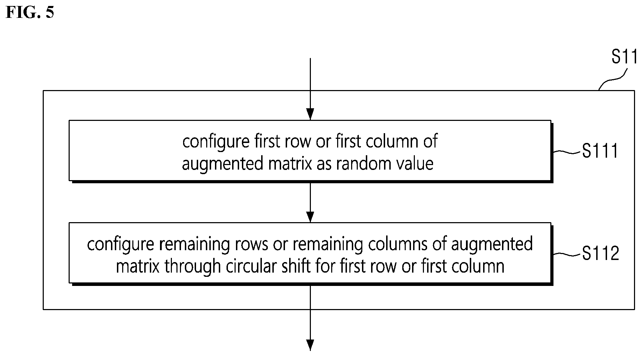

FIG. 5 is a flow chart illustrating a method of generating an augmented matrix according to some embodiments of the present disclosure. In FIG. 5, a flow of a step of generating an augmented matrix in advance to perform the steps S11 to S13 in FIG. 1 will be described.

Referring to FIG. 5, the step S11 of FIG. 1 may include step S111 and step S112 of generating an augmented matrix. That is, the augmented matrix may be generated in advance to calculate a first intermediate bit stream having a length greater than that of the input bit stream by inputting the input bit stream of the one-way function to the augmented matrix.

As one embodiment, in step S 111, a first row and/or a first column of the augmented matrix may be configured as a random value, and in step S112, the remaining rows and/or the remaining columns of the augmented matrix may be configured through a circular shift for the first row and/or the first column.

For example, in order to generate the augmented matrix $Lin_{in}$ 32 in FIG. 3, a first row of $Lin_{in}$ 32 may be configured as a random value, and the (i)th row of $Lin_{in}$ 32 may be configured as a vector obtained by shifting the (i-1)th row to the right as much as one space ($2 \leq i \leq m$). That is, a method of shifting an immediately previous row to the right may be applied to the second row to the (m)th row of $Lin_{in}$ 32, whereby a matrix in a form in which values are circular-shifted may be configured.

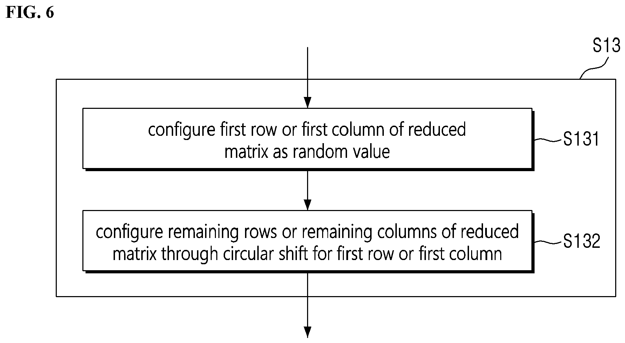

FIG. 6 is a flow chart illustrating a method of generating a reduced matrix according to some embodiments of the present disclosure. In FIG. 6, a flow of a step of generating a reduced matrix in advance to perform the steps S11 to S13 in FIG. 1 will be described.

Referring to FIG. 6, the step S13 of FIG. 1 may include step S131 and step S132 of generating a reduced matrix. That is, in order to output an output bit stream of one-way function having a length smaller than that of the second intermediate bit stream by inputting the second intermediate bit stream calculated from S-box to the reduced matrix, the reduced matrix may be generated in advance.

As one embodiment, in step S131, a first row and/or a first column of the reduced matrix may be configured as a random value, and in step S132, the remaining rows and/or the remaining columns of the reduced matrix may be configured through a circular shift for the first row and/or the first column.

For example, in order to generate a reduced matrix $Lin_{out}$ 36 in FIG. 3, a first column of $Lin_{out}$ 36 may be configured as a random value, and the (i)th column of $Lin_{out}$ 36 may be configured as a vector obtained by shifting the (i-1)th column to a downward direction as much as one space ($2 \leq i \leq m$). That is, a method of shifting an immediately previous column to a downward direction may be sequentially applied to the second column to (m)th column of $Lin_{out}$ 36, whereby a matrix in a form in which values are circular-shifted may be configured. In this way, a method for configuring a matrix through a circular shift may provide an effect of maintaining an input information amount as it is when outputting the same.

As described above, in FIGS. 5 and 6, in order to generate an augmented matrix and a reduced matrix, the first row and/or the first column is configured as a random value, and the remaining rows and/or columns are configured through a circular shift, but the present disclosure is not limited thereto.

As one embodiment, when the augmented matrix and the reduced matrix are generated, a method of configuring entire rows and/or entire columns as random values may be applied.

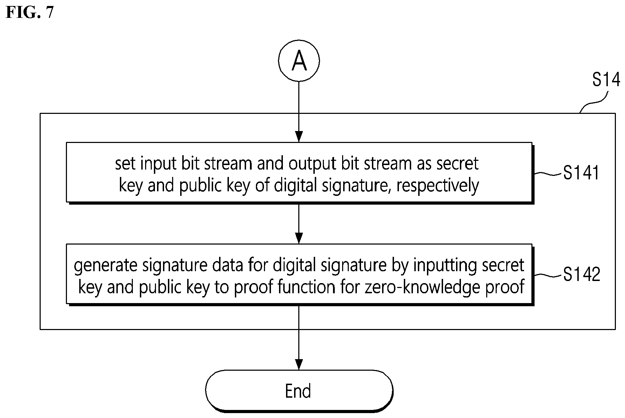

FIG. 7 is a flow chart illustrating a method of performing a digital signature according to some embodiments of the present disclosure. Referring to FIG. 7, when a zero-knowledge proof-friendly one-way function is configured by performing the steps S11 to S13 in FIG. 1, step S14 of performing a digital signature using the zero-knowledge proof-friendly one-way function may be additionally performed.

As one embodiment, in step S14, the computing device 100 may perform a zero-knowledge proof-based digital signature by using an input bit stream and an output bit stream of one-way function.

In this case, the step S14 may include a step S141 of setting an input bit stream and an output bit stream as a secret key and a public key of a digital signature, respectively, and a step S 142 of generating signature data for the digital signature by inputting the secret key and the public key to a proof function for the zero-knowledge proof.

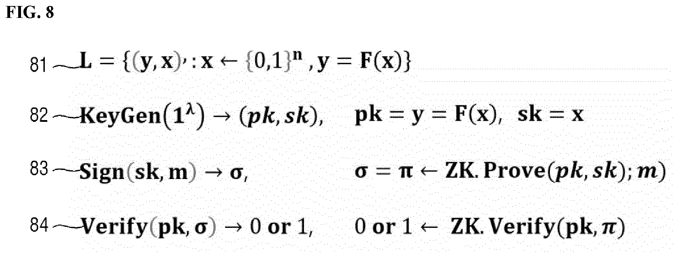

As one embodiment, referring to FIG. 8, three algorithms may be sequentially performed to perform the zero-knowledge proof-based digital signature by using the input bit stream and the output bit stream of one-way function. The three algorithms of the digital signature may include, for example, a key generation part 82, a signature generation part 83, and a key verification part 84.

For example, when a zero-knowledge proof-friendly one-way function $F(x)$ is configured to output an output bit stream 'y' having a length of 'n' by inputting an input bit stream 'x' having a length of 'n', the key generation part 82, the signature generation part 83 and the key verification part 84 may be sequentially performed with respect to a set $L(y, x)$ 81.

First, in the key generation part 82, the computing device 100 may generate a random value having a length of 'n' with respect to a safety parameter $\lambda$ as the input bit stream 'x', which may be used to set the secret key sk and the public key pk of the digital signature. At this time, the input bit stream 'x' may be set as the secret key sk of the digital signature, and the output bit stream $y=F(x)$ of the one-way function may be set as the public key pk of the digital signature.

Next, in the signature generation part 83, the computing device 100 may generate signature data $\sigma$ for the digital signature by inputting the secret key sk and the public key pk, which are set in the key generation part 82, together with a message 'm', to a proof function ZK.Prove for zero-knowledge proof.

Finally, in the key verification part 84, the computing device 100 may output a verification result value by inputting the signature data $\sigma$ generated in the signature generation part 83 and the public key pk to a verification function ZK.Verify for zero-knowledge verification. At this time, the verification result value is output as 0 or 1, and when the verification result value is 1, it means that a verifier has successfully generated the signature without knowing the secret key sk.

According to the embodiment of the present disclosure as described above, in generating the zero-knowledge proof-based digital signature, the zero-knowledge proof-friendly one-way function may be configured to provide an effect of significantly reducing the signature size while being safe against the algebraic attack.

FIG. 9 is a hardware configuration diagram of an exemplary computing device 100.

Referring to FIG. 9, the computing device 100 may include one or more processors 101, a bus 107, a network interface 102, a memory 103, which loads a computer program 105 executed by the processors 101, and a storage 104 for storing the computer program 105.

The processor 101 controls overall operations of each component of computing device 100. The processor 101 may be configured to include at least one of a Central Processing Unit (CPU), a Micro Processor Unit (MPU), a Micro Controller Unit (MCU), a Graphics Processing Unit (GPU), or any type of processor well known in the art. Further, the processor 101 may perform calculations on at least one application or program for executing a method/operation according to various embodiments of the present disclosure. The computing device 100 may have one or more processors.

The memory 103 stores various data, instructions and/or information. The memory 103 may load one or more programs 105 from the storage 104 to execute methods/operations according to various embodiments of the present disclosure. An example of the memory 103 may be a RAM, but is not limited thereto.

The bus 107 provides communication between components of computing device 100. The bus 107 may be implemented as various types of bus such as an address bus, a data bus and a control bus.

The network interface 102 supports wired and wireless internet communication of the computing device 100. The network interface 102 may support various communication methods other than internet communication. To this end, the network interface 102 may be configured to comprise a communication module well known in the art of the present disclosure.

The storage 104 may non-temporarily store one or more computer programs 105. The storage 104 may be configured to comprise a non-volatile memory, such as a Read Only Memory (ROM), an Erasable Programmable ROM (EPROM), an Electrically Erasable Programmable ROM (EEPROM), a flash memory, a hard disk, a removable disk, or any type of computer readable recording medium well known in the art.

The computer program 105 may include one or more instructions, on which the methods/operations according to various embodiments of the present disclosure are implemented. When the computer program 105 is loaded on the memory 103, the processor 101 may perform the methods/operations in accordance with various embodiments of the present disclosure by executing the one or more instructions.

As one embodiment, a computer program 105 may include instructions for performing a step of calculating a first intermediate bit stream by inputting an input bit stream of one-way function to an augmented matrix, a step of calculating a second intermediate bit stream by dividing the first intermediate bit stream into a predetermined number of bit streams and inputting each of the divided predetermined number of bit streams to S-box, and a step of outputting an output bit stream of the one-way function by inputting the second intermediate bit stream to a reduced matrix.

The technical features of the present disclosure described so far may be embodied as computer readable codes on a computer readable medium. The computer readable medium may be, for example, a removable recording medium (CD, DVD, Blu-ray disc, USB storage device, removable hard disk) or a fixed recording medium (ROM, RAM, computer equipped hard disk). The computer program recorded on the computer readable medium may be transmitted to other computing device via a network such as internet and installed in the other computing device, thereby being used in the other computing device.

Although operations are shown in a specific order in the drawings, it should not be understood that desired results may be obtained when the operations must be performed in the specific order or sequential order or when all of the operations must be performed. In certain situations, multitasking and parallel processing may be advantageous. According to the above-described embodiments, it should not be understood that the separation of various configurations is necessarily required, and it should be understood that the described program components and systems may generally be integrated together into a single software product or be packaged into multiple software products.

In concluding the detailed description, those skilled in the art will appreciate that many variations and modifications may be made to the example embodiments without substantially departing from the principles of the present disclosure. Therefore, the example embodiments of the disclosure are used in a generic and descriptive sense only and not for purposes of limitation.

**Claims**

1. A calculating method using a zero-knowledge proof-friendly one-way function, performed by a computing device, the calculating method comprising:

   calculating (S11) a first intermediate bit stream by inputting an input bit stream of the one-way function to an augmented matrix;
   calculating (S12) a second intermediate bit stream by dividing the first intermediate bit stream into a predetermined number of bit streams and inputting each of the predetermined number of divided bit streams to a substitution-box, S-box;

   outputting (S13) an output bit stream of the one-way function by inputting the second intermediate bit stream to a reduced matrix; and
   performing a zero-knowledge proof-based digital signature by using the input bit stream and the output bit stream of the one-way function, wherein each of a length of the input bit stream and a length of the output bit stream of the one-way function is N, being a natural number, each of a length of the first intermediate bit stream and a length of the second intermediate bit stream is M, M being a natural number, where M is a multiple of N, and a length of a divided bit stream input to the S-box is L, L being a natural number, where L is a factor of M,
   **characterized in that** the augmented matrix comprises a binary matrix having a size of M×N, and the reduced matrix comprises a binary matrix having a size of N×M.

2. The calculating method of claim 1, wherein the S-box includes K number of sub S-boxes, K being a natural number greater than or equal to 1, and the calculating the second intermediate bit stream includes:

   dividing the first intermediate bit stream into K number of bit streams; and
   inputting each of the K number of divided bit streams to each of the K number of sub S-boxes.

3. The calculating method of claim 2, wherein each of the K number of sub S-boxes has a nonlinear function for performing a polynomial operation on a finite field.

4. The calculating method of claim 1, further comprising generating the augmented matrix,
   wherein the generating the augmented matrix includes:

   configuring a first row and/or a first column of the augmented matrix based on a random value; and
   configuring remaining rows or remaining columns of the augmented matrix through a circular shift for the first row and/or the first column.

5. The calculating method of claim 1, further comprising generating the reduced matrix,
   wherein the generating the reduced matrix includes:

   configuring a first row and/or a first column of the reduced matrix based on a random value; and
   forming remaining rows or remaining columns of the reduced matrix through a circular shift for the first row and/or the first column.

6. The calculating method of claim 1, further comprising configuring entire rows and/or entire columns of the augmented matrix and entire rows and/or entire columns of the reduced matrix based on random values.

7. The calculating method of claim 1, wherein the one-way function is configured as a single round.

8. The calculating method of claim 1, wherein the performing the zero-knowledge proof-based digital signature includes:

setting the input bit stream and the output bit stream as a secret key and a public key of a digital signature, respectively; and
generating signature data for the digital signature by inputting the secret key and the public key to a proof function for a zero-knowledge proof.

9. A computing device comprising:

one or more processors; and
a storage configured to store a computer program executable by the one or more processors, wherein the computer program comprises:

first calculation code configured to cause the one or more processors to calculate a first intermediate bit stream by inputting an input bit stream of a one-way function to an augmented matrix;
second calculation code configured to cause the one or more processors to calculate a second intermediate bit stream by dividing the first intermediate bit stream into a predetermined number of bit streams and inputting each of the predetermined number of divided bit streams to S-box;
output code configured to cause the one or more processors to output an output bit stream of the one-way function by inputting the second intermediate bit stream to a reduced matrix; and
code configured to perform a zero-knowledge proof-based digital signature by using the input bit stream and the output bit stream of the one-way function,
wherein each of a length of the input bit stream and a length of the output bit stream of the one-way function is N, N being a natural number,
each of a length of the first intermediate bit stream and a length of the second intermediate bit stream is M, M being a natural number, where M is a multiple of N, and

a length of a divided bit stream input to the S-box is L, L being a natural number, where L is a factor of M,
**characterized in that** the augmented matrix comprises a binary matrix having a size of M×N, and the reduced matrix comprises a binary matrix having a size of N×M.

10. The computing device of claim 9, wherein the S-box includes K number of sub S-boxes, K being a natural number greater than or equal to 1, and the second calculation code causes the one or more processors to calculate the second intermediate bit stream by:

dividing the first intermediate bit stream into K number of bit streams; and
inputting each of the K number of divided bit streams to each of the K number of sub S-boxes.

11. The computing device of claim 10, wherein each of the K number of sub S-boxes has a nonlinear function for performing a polynomial operation on a finite field.

**Patentansprüche**

1. Berechnungsverfahren unter Verwendung einer Zero-Knowledge-Proof-freundlichen Einwegfunktion, durch eine Rechenvorrichtung durchgeführt, wobei das Rechenverfahren umfasst:

Berechnen (S11) eines ersten Zwischenbitstroms durch Eingeben eines Eingabebitstroms der Einwegfunktion in eine augmentierte Matrix;
Berechnen (S12) eines zweiten Zwischenbitstroms durch Dividieren des ersten Zwischenbitstroms in eine vorbestimmte Anzahl von Bitströmen und Eingeben jeder der vorbestimmten Anzahl von dividierten Bitströmen in eine Substitutionsbox, S-Box;
Ausgeben (S13) eines Ausgabebitstroms der Einwegfunktion durch Eingeben des zweiten Zwischenbitstroms in eine reduzierte Matrix; und
Durchführen einer Zero-Knowledge-Proof-basierten digitalen Signatur durch Verwenden des Eingabebitstroms und des Ausgabebitstroms der Einwegfunktion,
wobei jede einer Länge des Eingabebitstroms und einer Länge des Ausgabebitstroms der Einwegfunktion N beträgt, wobei N eine natürliche Zahl ist,
jede einer Länge des ersten Zwischenbitstroms und einer Länge des zweiten Zwischenbitstroms M beträgt, wobei M eine natürliche Zahl ist,
wobei M ein Vielfaches von N ist, und

eine Länge eines dividierten in die S-Box eingegebenen Bitstroms L beträgt, wobei L eine natürliche Zahl ist,

wobei L ein Faktor von M ist,

**dadurch gekennzeichnet, dass** die augmentierte Matrix eine binäre Matrix umfasst mit einer Größe MxN und die reduzierte Matrix eine binäre Matrix mit einer Größe von NxM umfasst.

2. Berechnungsverfahren nach Anspruch 1, wobei die S-Box eine Anzahl K von Sub-S-Boxen enthält, wobei K eine natürliche Zahl ist größer oder gleich 1, und das Berechnen des zweiten Zwischenbitstroms beinhaltet:

Dividieren des ersten Zwischenbitstroms in eine Anzahl K von Bitströmen; und
Eingeben jeder der Anzahl K von dividierten Bitströmen in jede der Anzahl K von Sub-S-Boxen.

3. Berechnungsverfahren nach Anspruch 2, wobei jede der Anzahl K von Sub-S-Boxen eine nichtlineare Funktion aufweist zum Durchführen einer Polynomoperation an einem finiten Feld.

4. Berechnungsverfahren nach Anspruch 1, weiter umfassend das Generieren der augmentierten Matrix, wobei das Generieren der augmentierten Matrix beinhaltet:

Konfigurieren einer ersten Reihe und/oder einer ersten Spalte der augmentierten Matrix auf Basis eines Zufallswerts; und
Konfigurieren verbleibender Reihen oder verbleibender Spalten der augmentierten Matrix durch eine Kreisverschiebung für die erste Reihe und/oder die erste Spalte.

5. Berechnungsverfahren nach Anspruch 1, weiter umfassend das Generieren der reduzierten Matrix, wobei das Generieren der reduzierten Matrix beinhaltet:

Konfigurieren einer ersten Reihe und/oder einer ersten Spalte der reduzierten Matrix auf Basis eines Zufallswerts; und
Bilden verbleibender Reihen oder verbleibender Spalten der reduzierten Matrix durch eine Kreisverschiebung für die erste Reihe und/oder die erste Spalte.

6. Berechnungsverfahren nach Anspruch 1, weiter umfassend das Konfigurieren ganzer Reihen und/oder ganzer Spalten der augmentierten Matrix und ganzer Reihen und/oder ganzer Spalten der reduzierten Matrix auf Basis von Zufallswerten.

7. Berechnungsverfahren nach Anspruch 1, wobei die Einwegfunktion als eine einzelne Runde konfiguriert ist.

8. Berechnungsverfahren nach Anspruch 1, wobei das Durchführen der Zero-Knowledge-Proof-basierten digitalen Signatur beinhaltet:

Einstellen des Eingabebitstroms und des Ausgabebitstroms als ein geheimer Schlüssel bzw. ein öffentlicher Schlüssel einer digitalen Signatur; und
Generieren von Signaturdaten für die digitale Signatur durch Eingeben des geheimen Schlüssels und des öffentlichen Schlüssels in eine Proof-Funktion für einen Zero-Knowledge-Proof.

9. Rechenvorrichtung, umfassend:

einen oder mehrere Prozessoren; und
eine Ablage, die konfiguriert ist zum Ablegen eines durch den einen oder die mehreren Prozes-soren ausführbaren Computerprogramms, wo-bei das Computerprogramm umfasst:

einen ersten Berechnungscode, der konfiguriert ist zu bewirken, dass der eine oder die mehreren Prozessoren einen ersten Zwischenbitstrom berechnen durch Einge-ben eines Eingabebitstroms einer Einweg-funktion in eine augmentierte Matrix;
einen zweiten Berechnungscode, der konfiguriert ist zu bewirken, dass der eine oder die mehreren Prozessoren einen zweiten Zwischenbitstrom berechnen durch Dividieren des ersten Zwischenbitstroms in eine vorbestimmte Anzahl von Bitströmen und Eingeben jeder der vorbestimmten Anzahl dividierter Bitströme in eine S-Box;
einen Ausgabecode, der konfiguriert ist zu bewirken, dass der eine oder die mehreren Prozessoren einen Ausgabebitstrom der Einwegfunktion ausgeben durch Eingeben des zweiten Zwischenbitstroms in eine reduzierte Matrix; und
einen Code, der konfiguriert ist zum Durchführen einer Zero-Knowledge-Proof-basierten digitalen Signatur durch Verwenden des Eingabebitstroms und des Ausgabebitstroms der Einwegfunktion,
wobei jede einer Länge des Eingabebitstroms und einer Länge des Ausgabebitstroms der Einwegfunktion N beträgt, wobei N eine natürliche Zahl ist,
jede einer Länge des ersten Zwischenbitstroms und einer Länge des zweiten Zwischenbitstroms M beträgt, wobei M eine natürliche Zahl ist,

wobei M ein Vielfaches von N ist, und
eine Länge eines dividierten in die S-Box
eingegebenen Bitstroms L beträgt, wobei L
eine natürliche Zahl ist,
wobei L ein Faktor von M ist,
**dadurch gekennzeichnet, dass** die augmentierte Matrix eine binäre Matrix umfasst mit einer Größe von MxN und die reduzierte Matrix eine binäre Matrix mit einer Größe von NxM umfasst.

10. Rechenvorrichtung nach Anspruch 9, wobei die S-Box eine Anzahl K von Sub-S-Boxen enthält, wobei K eine natürliche Zahl größer oder gleich 1 ist, und der zweite Berechnungscode bewirkt, dass der eine oder die mehreren Prozessoren den zweiten Zwischenbitstrom berechnen durch:

Dividieren des ersten Zwischenbitstroms in eine Anzahl K von Bitströmen; und
Eingeben jeder der Anzahl K von dividierten Bitströmen in jede der Anzahl K von Sub-S-Boxen.

11. Rechenvorrichtung nach Anspruch 10, wobei jede der Anzahl K von Sub-S-Boxen eine nichtlineare Funktion aufweist zum Durchführen einer Polynomoperation an einem finiten Feld.

**Revendications**

1. Procédé de calcul utilisant une fonction unidirectionnelle adaptée aux preuves à divulgation nulle de connaissance, exécutée par un dispositif informatique, ce procédé de calcul comprenant :

le calcul (S11) d'un premier train de bits intermédiaire en entrant un train de bits d'entrée de la fonction unidirectionnelle dans une matrice augmentée ; le calcul (S12) d'un deuxième train de bits intermédiaire en divisant le premier train de bits intermédiaire en un nombre prédéterminé de trains de bits et en entrant chacun du nombre prédéterminé de trains de bits divisés dans une boîte de substitution, S-box ;
la fourniture (S13) d'un train de bits de sortie de la fonction unidirectionnelle en entrant le deuxième train de bits intermédiaire dans une matrice réduite ; et
l'exécution d'une signature numérique basée sur preuve à divulgation nulle de connaissance en utilisant le train de bits d'entrée et le train de bits de sortie de la fonction unidirectionnelle, chacune d'une longueur du train de bits d'entrée et d'une longueur du train de bits de sortie de la fonction unidirectionnelle étant N, N étant un entier naturel,
chacune d'une longueur du premier train de bits intermédiaire et d'une longueur du deuxième train de bits intermédiaire étant M, M étant un entier naturel et M étant un multiple de N, et une longueur d'une entrée de trains de bits divisés dans la S-box étant L, L étant un entier naturel et L étant un facteur de M,
**caractérisé en ce que**
la matrice augmentée comprend une matrice binaire ayant une taille de M × N, et la matrice réduite comprend une matrice binaire ayant une taille de N × M.

2. Procédé de calcul selon la revendication 1, dans lequel la S-box comprend un nombre K de boîtes S-box secondaires, K étant un entier naturel plus grand que ou égal à 1 et dans lequel le calcul du deuxième train de bits intermédiaire comprend :

la division du premier train de bits intermédiaire en un nombre K de trains de bits ; et
l'entrée de chacun du nombre K de trains de bits divisés dans chacune du nombre K de boîtes S-box secondaires.

3. Procédé de calcul selon la revendication 2, dans lequel chacun du nombre K de boîtes S-box secondaires a une fonction non linéaire pour exécuter une opération polynomiale sur un corps fini.

4. Procédé de calcul selon la revendication 1, comprenant en outre la génération de la matrice augmentée, la génération de la matrice augmentée comprenant :

la configuration d'une première rangée et/ou d'une première colonne de la matrice augmentée en se basant sur une valeur aléatoire ; et
la configuration des rangées restantes ou des colonnes restantes de la matrice augmentée au moyen d'un décalage circulaire pour la première rangée et/ou la première colonne.

5. Procédé de calcul selon la revendication 1, comprenant en outre la génération de la matrice réduite, la génération de la matrice réduite comprenant :

la configuration d'une première rangée et/ou d'une première colonne de la matrice réduite en se basant sur une valeur aléatoire ; et
la formation des rangées restantes ou des colonnes restantes de la matrice réduite au moyen d'un décalage circulaire pour la première rangée et/ou la première colonne.

6. Procédé de calcul selon la revendication 1, comprenant en outre la configuration de rangées entières et/ou de colonnes entières de la matrice augmentée et de rangées entières et/ou de colonnes entières de la matrice réduite en se basant sur des valeurs aléatoires.

7. Procédé de calcul selon la revendication 1, dans lequel la fonction unidirectionnelle est configurée comme un seul tour.

8. Procédé de calcul selon la revendication 1, dans lequel l'exécution de la signature numérique basée sur preuve à divulgation nulle de connaissance comprend :

l'établissement du train de bits d'entrée et du train de bits de sortie comme une clé secrète et une clé publique d'une signature numérique, respectivement ; et
la génération de données de signature pour la signature numérique en entrant la clé secrète et la clé publique dans une fonction de preuve pour une preuve à divulgation nulle de connaissance.

9. Dispositif informatique comprenant :
un ou plusieurs processeurs ; et
un dispositif de stockage configuré de façon à stocker un programme informatique exécutable par le ou les processeurs, ce programme informatique comprenant :

un premier code de calcul configuré de façon à faire en sorte que le ou les processeurs calculent un premier train de bits intermédiaire en entrant un train de bits d'entrée d'une fonction unidirectionnelle dans une matrice augmentée ;
un deuxième code de calcul configuré de façon à faire en sorte que le ou les processeurs calculent un deuxième train de bits intermédiaire en divisant le premier train de bits intermédiaire en un nombre prédéterminé de trains de bits et en entrant chacun du nombre prédéterminé de trains de bits divisés dans une boîte S-box ;
un code de sortie configuré de façon à faire en sorte que le ou les processeurs fournissent un train de bits de sortie de la fonction unidirectionnelle en entrant le deuxième train de bits intermédiaire dans une matrice réduite ; et
un code configuré de façon à exécuter une signature numérique basée sur preuve à divulgation nulle de connaissance en utilisant le train de bits d'entrée et le train de bits de sortie de la fonction unidirectionnelle,
chacune d'une longueur du train de bits d'entrée et d'une longueur du train de bits de sortie de la fonction unidirectionnelle étant $N$, $N$ étant un entier naturel, chacune d'une longueur du premier train de bits intermédiaire et d'une longueur du deuxième train de bits intermédiaire étant $M$, $M$ étant un entier naturel et $M$ étant un multiple de $N$, et
une longueur d'une entrée de trains de bits divisés dans la boîte S-box étant $L$, $L$ étant un entier naturel et $L$ étant un facteur de $M$, **caractérisé en ce que**
la matrice augmentée comprend une matrice binaire ayant une taille de $M \times N$, et la matrice réduite comprend une matrice binaire ayant une taille de $N \times M$.

10. Dispositif informatique selon la revendication 9, dans lequel la boîte S-box comprend un nombre $K$ de boîtes S-box secondaires, $K$ étant un entier naturel plus grand que ou égal à 1, et dans lequel
le deuxième code de calcul fait en sorte que le ou les processeurs calculent le deuxième train de bits intermédiaire en :

divisant le premier train de bits intermédiaire en un nombre $K$ de trains de bits ; et en entrant chacun du nombre $K$ de trains de bits divisés dans chacune du nombre $K$ de boîtes S-box secondaires.

11. Dispositif informatique selon la revendication 10, dans lequel chacun du nombre $K$ de boîtes S-box secondaires a une fonction non linéaire pour exécuter une opération polynomiale sur un corps fini.

FIG. 1

```
                    ┌─────────────────┐
                    │      Start      │
                    └─────────────────┘
                             │
                             ▼
┌────────────────────────────────────────────────────────┐
│         calculate first intermediate bit stream by      │
│   inputting input bit stream of one-way function to     │── S11
│                   augmented matrix                      │
└────────────────────────────────────────────────────────┘
                             │
                             ▼
┌────────────────────────────────────────────────────────┐
│ calculate second intermediate bit stream by dividing    │
│ first intermediate bit stream into predetermined number │── S12
│ of bit streams and inputting each of predetermined      │
│ number of divided bit streams to S-box                  │
└────────────────────────────────────────────────────────┘
                             │
                             ▼
┌────────────────────────────────────────────────────────┐
│      output output bit stream of one-way function by    │
│  inputting second intermediate bit stream to a reduced  │── S13
│                       matrix                            │
└────────────────────────────────────────────────────────┘
                             │
                             ▼
                            (A)
```

**FIG. 2**

S12

| divide first intermediate bit stream into K number of bit streams | S121 |

| input each of K number of divided bit streams to sub S-box | S122 |

**FIG. 3**

**FIG. 4**

31 $\quad$ $\mathbf{x} \in \{0, 1\}^n$

33 $\quad$ $\mathbf{state}_1 = \mathbf{Lin_{in}} \cdot \mathbf{x} \in \{0, 1\}^m$

331 $\quad$ $\mathbf{state}_1 = \left(u_1, \cdots, u_{m/\ell}\right) \in \{0, 1\}^{\ell \cdot \left(\frac{m}{\ell}\right)}, \quad u_i \in \{0, 1\}^\ell$

35 $\quad$ $\mathbf{state}_2 = \left(v_1, \cdots, v_{m/\ell}\right) \in \{0, 1\}^m, \quad v_i = S(u_i) \in \{0,1\}^\ell$

37 $\quad$ $\mathbf{y} = \mathbf{Lin_{out}} \cdot \mathbf{state}_2 \in \{0, 1\}^n$

**FIG. 5**

**FIG. 6**

S13

configure first row or first column of reduced matrix as random value — S131

configure remaining rows or remaining columns of reduced matrix through circular shift for first row or first column — S132

**FIG. 7**

**FIG. 8**

$$81 \sim\!\!\text{L} = \{(\mathbf{y}, \mathbf{x})' : \mathbf{x} \leftarrow \{0,1\}^{\mathbf{n}}, \mathbf{y} = \text{F}(\mathbf{x})\}$$

$$82 \sim\!\!\text{KeyGen}(\mathbf{1}^{\lambda}) \rightarrow (pk, sk), \quad \text{pk} = \mathbf{y} = \text{F}(\mathbf{x}), \quad \text{sk} = \mathbf{x}$$

$$83 \sim\!\!\text{Sign}(\text{sk}, \text{m}) \rightarrow \sigma, \quad\quad \sigma = \pi \leftarrow \text{ZK}.\text{Prove}(pk, sk); m)$$

$$84 \sim\!\!\text{Verify}(\text{pk}, \sigma) \rightarrow 0 \text{ or } 1, \quad 0 \text{ or } 1 \leftarrow \text{ZK}.\text{Verify}(\text{pk}, \pi)$$

**FIG. 9**

<u>100</u>

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ISHAI et al.** *STOC,* 2007

- **MELISSA CHASE et al.** Post-Quantum Zero-Knowledge and Signatures from Symmetric-Key Primitives. *IACR, International Association for Cryptologic Research,* 27 March 2017, vol. 20170330 (123540), 1-25